# EUROPEAN PATENT SPECIFICATION

(11) **EP 3 131 258 B1**
(45) Date of publication and mention of the grant of the patent: **18.10.2017**
(21) Application number: 16162158.6
(22) Date of filing: 24.03.2016
(51) Int. Cl.: H04L 29/06, H04L 29/08, G05B 19/042, H04L 12/28, H04W 4/00, H04W 12/06

(54) **SMART HOUSEHOLD EQUIPMENT CONTROL METHODS AND CORRESPONDING APPARATUS**
STEUERUNGSVERFAHREN FÜR INTELLIGENTE HAUSHALTSGERÄTE UND ZUGEHÖRIGE VORRICHTUNG
PROCÉDÉS DE COMMANDE D'ÉQUIPEMENT MÉNAGER À PUCE ET APPAREIL CORRESPONDANT

(30) Priority: 13.08.2015 CN 201510497278
(43) Date of publication of application: 15.02.2017
(73) Proprietor: Xiaomi Inc., Beijing 100085 (CN)
(72) Inventor: HOU, Enxing, Haidian District Beijing 100085 (CN); MENG, Deguo, Haidian District Beijing 100085 (CN); HEI, Lijun, Haidian District Beijing 100085 (CN)
(74) Representative: Sadler, Peter Frederick

(56) References cited:
- WO-A1-2015/102467
- CN-A- 104 570 746
- US-A1- 2014 191 848
- US-A1- 2015 126 126

## Description

### TECHNICAL FIELD

The present disclosure is related to the field of smart household equipment, and more particularly to: control methods and apparatus for controlling smart household equipment; computer programs and recording mediums for use in controlling smart household equipment; smart household equipment; and a corresponding mobile device and a wearable device.

### BACKGROUND

In the related arts, various smart household equipment or devices are provided, such as smart air-conditioners, smart water dispensers and smart refrigerators etc. To facilitate operations, these smart household equipment are connected to networks in the related arts, so that users can remotely control the smart household equipment using smart cell phones or PC client terminals etc.

However, users need to input control commands for smart household equipment with smart cell phones or the like each time they want to use each smart household device.

Chinese patent application CN 104570746 describes an intelligent home furnishing control system and method. A broadcast sending module is arranged in a wearable device for broadcasting control messages carrying specified intelligent home furnishing marks. A broadcast receiving module is arranged in the intelligent home furnishing for receiving control messages which are broadcast by the wearable device. When the mark of the control message is detected to be matched with the mark of the intelligent home furnishing, the intelligent home furnishing performs operation according to a control command in the control message. US patent application US 2014/191848 describes a system that includes a network device that is disposed at a site and configured to communicate with a wireless network. A controller is disposed at the site and is in communication with the wireless network, and a passive device is disposed at the site and includes a unique identifier disposed thereon. The system further includes a mobile device associated with the site and which includes a communication chip. The communication chip is configured to read the unique identifier when the mobile device is placed in close proximity to the passive device, and a mobile application disposed on the mobile device is configured to transmit the unique identifier to the controller for use in controlling the network device.

### SUMMARY

The present disclosure provides control methods and apparatus, a computer program and a recording medium for a smart household equipment, a smart household device, a mobile device and a wearable device to solve the problems of the related arts as disclosed in the appended claims.

According to a first aspect of embodiments of the present disclosure, there is provided a control method for a smart household equipment, comprising:

receiving by the smart household equipment a radio broadcast message containing an identification, the radio broadcast message being sent by a wearable device;

determining by the smart household equipment whether the identification is stored unique identification of a wearable device, the unique identification being sent from a mobile device, wherein the wearable device is a wearable device bound to the mobile device or a wearable device communicating with the mobile device through near field communication NFC in a certain range, each wearable device corresponds to one unique identification, and the mobile device communicates with the smart household equipment through a local area network LAN or Internet;

if the identification is the unique identification, executing by the smart household equipment a preset control command to switch the smart household equipment from an original operating state to a smart operating state, the original operating state being a first state in which the smart home device operates according to a first set of operating parameters and the smart operating state being a second state in which the smart device operates according to a second, different, set of operating parameters.

Optionally, the method further comprises: determining a received signal strength indication value of the radio broadcast message,

Wherein said executing the preset control command comprises executing the preset control command when the received signal strength indication value reaches a preset value and the radio broadcast message contains the unique identification.

Optionally, the preset control command is configured to adjust at least one of an operating parameter and an operating mode of the smart household equipment which receives the radio broadcast message.

Optionally, the method further comprises: receiving the unique identification sent by the mobile device through a WIFI connection established therewith; and

receiving the radio broadcast message through a Bluetooth connection established with the wearable device.

Optionally, the method further comprises: returning from the smart operating state to the original operating state when the radio broadcast message is not received in a preset time period.

According to a second aspect of the embodiments of the present disclosure, there is provided a smart household equipment, comprising:
a processor; and
a memory storing an instruction executable by the processor,
wherein the processor is configured to carry out any of the methods of the first aspect.

According to a third aspect of the embodiments of the present disclosure, there is provided a system comprising a smart household device according to the first aspect, a mobile device and a wearable device, wherein the mobile device communicates with the smart household equipment through a local area network LAN and/or through the Internet, and comprises:
a processor; and
a memory storing an instruction executable by the processor,
wherein the processor is configured to:
   acquire a unique identification of the wearable device; and
   send the unique identification to the smart household equipment, so that the smart household equipment stores the unique identification and executes a preset control command when receiving a radio broadcast message containing the unique identification;
the wearable device, comprising:
   a processor; and
   a memory storing an instruction executable by the processor,
   wherein the processor is configured to:
      periodically send to the smart household device a radio broadcast message containing a unique identification of the wearable device, wherein the wearable device is a wearable device bound to the mobile device or a wearable device communicating with the mobile device through near field communication NFC in a certain range, and the wearable device corresponds to one unique identification.

The technical solutions of the embodiments of this disclosure have the following advantageous effects:

As known from the above embodiments of this disclosure, by sending the unique identification of the bound wearable device to the smart household equipment, the smart household equipment can identify the wearable device and then automatically execute the preset control command, which simplifies users' operations. Since the wearable device is bound to the mobile device in advance, which means that the wearable device is reliable, this ensures the security when the smart household equipment executes the preset control command. In addition, since the transmission distance of the radio broadcast message is limited, when the smart household equipment receives the radio broadcast message containing the unique identification, this means that the user of the wearable device is nearby; therefore, by executing the preset control command, the user's needs (if any) may be satisfied before the user comes closer, thereby enhancing the user experience.

Further, by acquiring a received signal strength indication value of the radio broadcast message, a distance between the wearable device which sends the radio broadcast message and the smart household equipment, or a distance between the user and the smart household equipment, can be determined. Since only when the user is in a certain range, can he/she have application needs for the smart household equipment, by acquiring the above distance, the preset control command can be executed only when the user is in a short distance (or the received signal strength indication value reaches a preset value), thus avoiding power waste due to false executions.

Further, the smart household equipment can support various communication schemes. For example, the smart household equipment can communicate with the mobile device and the wearable device through WIFI and Bluetooth. By supporting multiple communication schemes, communications of the smart household equipment can be diversified, possible interference among different types of devices can be avoided and the communication reliability of the smart household equipment can be improved.

Further, the smart household equipment can determine that the user has gone away when the radio broadcast message is not received in a preset time period, and then returns to its original operating state automatically, thereby avoiding waste of resources such as electric power.

Further, by displaying scanned wearable devices by the mobile device, the user can view and select a needed wearable device more intuitively, which may improve the user experience.

Further, the user can control the applications of the wearable device using the mobile device through the broadcast control command sent by the mobile device, and thus control the smart household equipment. In addition, by detecting the user's operations by the wearable device, the user can control the operating states of the smart household equipment through operations performed on the wearable device. Furthermore, the user's needs in various scenarios may be satisfied through cooperation of various control modes, which may improve the user experience.

In one particular embodiment, the steps of the control method for a smart household equipment are determined by computer program instructions.

Consequently, according to an eleventh aspect, the invention is also directed to a computer program for executing the steps of a control method for a smart household equipment as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It should be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Figs. 1A-1B are schematic drawings showing the control of smart household equipment in the related arts;
Fig. 2 is a flow chart showing a control method for a smart household equipment at a mobile device side according to an exemplary embodiment;
Figs. 3A-3B are schematic drawings each showing an interface of the mobile device according to an exemplary embodiment;
Fig. 4 is a flow chart showing a control method for a smart household equipment at a wearable device side according to an exemplary embodiment;
Fig. 5 is a flow chart showing a control method for a smart household equipment at a smart household equipment side according to an exemplary embodiment;
Fig. 6 is a flow chart showing a control method for a smart household equipment according to an exemplary embodiment;
Fig. 7 is a flow chart showing a process performed by a smart household equipmenton a radio broadcast message according to an exemplary embodiment;
Figs. 8-9 are block diagrams of a control apparatus for a smart household equipment at a mobile device side according to an exemplary embodiment;
Figs. 10-12 are block diagrams of a control apparatus for a smart household equipment at a wearable device side according to an exemplary embodiment;
Figs. 13-17 are block diagrams of a control apparatus for a smart household equipment at a smart household equipment side according to an exemplary embodiment; and
Fig. 18 is a schematic drawing showing a control apparatus for a smart household equipment according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise presented. The embodiments set forth in the following description of exemplary embodiments do not represent all embodiments consistent with the invention. Instead, they are merely examples of apparatuses and methods consistent with aspects related to the invention as recited in the appended claims.

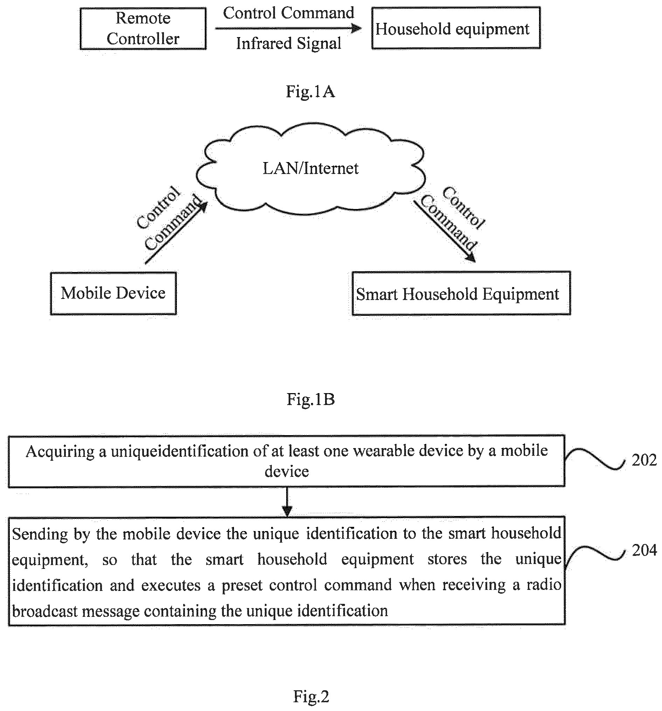

The related arts provide various solutions for controlling smart household equipment. As shown in Fig. 1A, the related arts provide a single remote controller. By selecting and pressing a physical button on the remote controller by a user, the remote controller can send a corresponding control command to a smart household equipment. Usually, the control command is carried and transmitted by infrared signals.

However, since different infrared encoding schemes are adopted for different smart household equipment, each smart household equipment should be allocated with a remote controller in the solution shown by Fig. 1A. When multiple smart household equipment are installed in a user's house, multiple remote controllers should be used at the same time, which may easily cause confusion or may be lost or may be difficult to find.

Accordingly, the related arts provide a solution shown in Fig. 1B. In this solution, a user's mobile device and his/her smart household equipment are connected to a network simultaneously, such as a local area network LAN or the Internet; after the user issues a control command using the mobile device, the control command is transmitted to the smart household equipment through the LAN or the Internet to control the same. The user can select a smart household equipment he/she wants to control on the mobile device so as to control multiple smart household equipment respectively.

However, even if it is not needed to use multiple smart household equipment, the user still needs to manually select a smart household equipment through the mobile device and manually issue a corresponding control command. In particular, when the user manually issues a control command to a smart household equipment, the user may feel uncomfortable, since it may take some time for the smart household equipment to meet the user's demand.

Therefore, the present disclosure improves the control solutions for smart household equipment to solve the above technical problems in the related arts.

Fig. 2 is a flow chart showing a control method for a smart household equipment at a mobile device side according to an exemplary embodiment. As shown in Fig. 2, when applied to a mobile device, the method may comprise the following steps:

Step 202: acquiring a unique identification of a wearable device by the mobile device.

In this embodiment, in one case, the wearable device may be a wearable device bound to the mobile device. Two devices may be considered bound if a direct communication path exists between them, established by the exchange of data between the two devices. A binding relationship may therefore establish a correspondence, pairing, coupling or association that connects, and allows communication between, the wearable device and the mobile device. In this case, since a binding relation is established between the mobile device and the wearable device, the security and reliability is confirmed between the devices; on this basis, the mobile device acquires the unique identification of the wearable device. In another case, the wearable device may be a wearable device communicating with the mobile device through near field communication NFC in a certain range. In this case, a binding relation is not established between the mobile device and the wearable device.

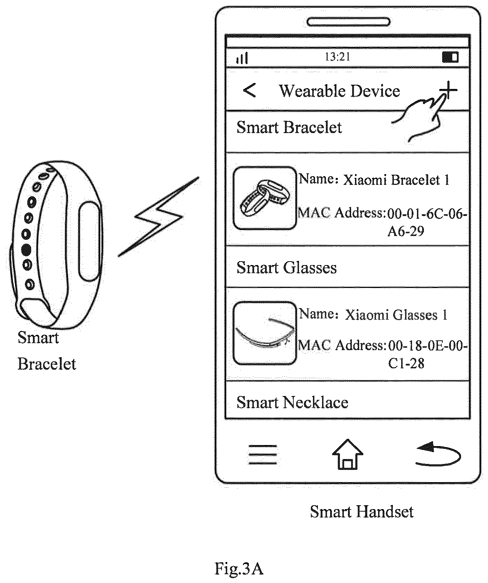

Assume the mobile device is a smart handset and the wearable device is a smart bracelet. As shown in Fig. 3A, the user can view all the wearable devices bound to the smart handset from a displayed page "Wearable Device" on the smart handset, such as "Xiaomi Bracelet 1" and "Xiaomi Glasses 1" etc. Thus, the wearable device may be any of various wearable devices, such as a smart bracelet, smart glasses, a smart necklace etc., which will not be limited in this disclosure. Similarly, the mobile device may be a smart handset, a tablet device etc., which will not be limited in this disclosure.

Each wearable device corresponds to one unique identification. In other words, the unique identifications of the wearable devices are different from each other. As shown in Fig. 3A, the unique identification in this disclosure may be a MAC address of a wearable device. For example, the MAC address of "Xiaomi Bracelet 1" is "00-01-6C-06-A6-29"; the MAC address of "Xiaomi Glasses 1" is "00-18-0E-00-C1-28". Since a MAC address is physically bound to each wearable device, it can uniquely correspond to the wearable device. Of course, instead of the MAC address, any other identification uniquely corresponding to each wearable device may be used in the technical solutions of this disclosure, such as the name ID of each wearable device, the device number, and the current user's login account etc., and will not be limited in this disclosure.

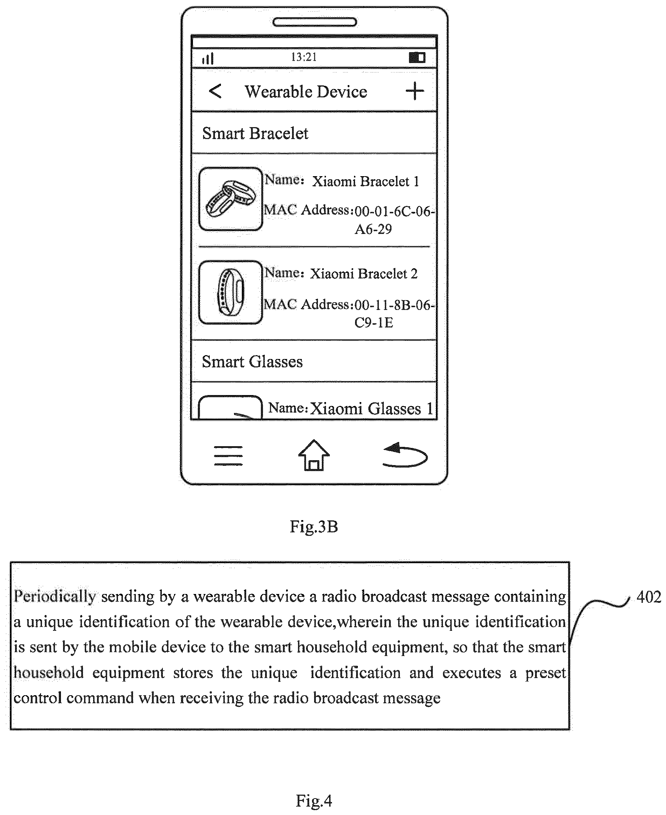

Assume the Bluetooth searching function of the smart handset can be started when the user clicks the icon "+" on the upper right in Fig. 3A; after the Bluetooth function of the smart bracelet is started, the smart bracelet can be searched out by the smart handset. As shown in Fig. 3B, the user can view the information related to the wearable devices searched by the smart handset, such as the information related to the smart bracelet. For example, the smart bracelet is named as "Xiaomi Bracelet 2", and its corresponding MAC address is "00-11-8B-06-C9-1E", then the MAC address can uniquely correspond to the "Xiaomi Bracelet 2".

Step 204: sending by the mobile device the unique identification to the smart household equipment, so that the smart household equipment stores the unique identification and executes a preset control command when receiving a radio broadcast message containing the unique identification, the mobile device communicating with the smart household equipment through a local area network LAN or the Internet.

In this embodiment, the mobile device may be always connected with the smart household equipment; or the mobile device may be connected with the smart household equipment only when the unique identification is sent to the smart household equipment, and after that, the connection is shut off.

The above unique identification-based control process also involves the wearable device and the smart household equipment in addition to the mobile device, which will be described in the following.

Fig. 4 is a flow chart showing a control method for a smart household equipment at the wearable device side according to an exemplary embodiment. As shown in Fig. 4, the method is applied to a wearable device and may comprise the following steps:

Step 402: periodically sending by the wearable device a radio broadcast message containing a unique identification of the wearable device, wherein the wearable device is a wearable device bound to a mobile device or a wearable device communicating with the mobile device through near field communication NFC in a certain range, each wearable device corresponds to one unique identification, and the mobile device communicates with the smart household equipment through a local area network LAN or the Internet,

wherein the unique identification is sent by the mobile device to the smart household equipment, so that the smart household equipment stores the unique identification and executes a preset control command when receiving the radio broadcast message.

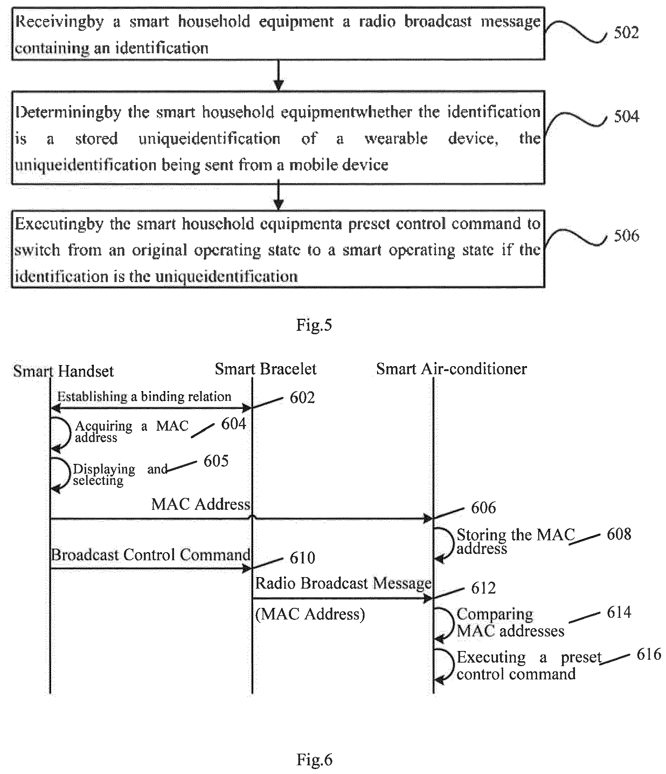

Accordingly, Fig. 5 is a flow chart showing a control method for a smart household equipment at the smart household equipment side according to an exemplary embodiment.

At step 502, a radio broadcast message containing an identification is received by the smart household equipment.

At step 504, the smart household equipment determines whether the identification is a stored unique identification of a wearable device, the unique identification being sent from a mobile device, wherein the wearable device is a wearable device bound to the mobile device or a wearable device communicating with the mobile device through near field communication NFC in a certain range, each said wearable device corresponds to one unique identification, and the mobile device communicates with the smart household equipment through a local area network LAN or the Internet.

At step 506, if the identification is the unique identification, the smart household equipment executes a preset control command to switch from an original operating state to a smart operating state.

In this embodiment, the original operating state refers to a first state in which the smart home device operates according to a first set of operating parameters before automatically executing the preset control command; the smart operating state refers to a second state the smart home device enters after automatically executing the preset control command in which the smart device operates according to a second, different, set of operating parameters. The smart household equipment can automatically switch between the two states through the technical solutions of this disclosure.

As known from the above embodiments of this disclosure, by sending the unique identification of the bound wearable device to the smart household equipment, the smart household equipment can identify the wearable device and then automatically execute the preset control command, which simplifies users' operations. Since the wearable device is bound to the mobile device in advance, which means that the wearable device is reliable, this ensures the security when the smart household equipment executes the preset control command. In addition, since the transmission distance of the radio broadcast message is limited, when the smart household equipment receives the radio broadcast message containing the unique identification, this means that the user of the wearable device is nearby; therefore, by executing the preset control command, the user's needs (if any) may be satisfied before the user comes closer, thereby enhancing the user experience.

In the following, the technical solutions of this disclosure will be described in detail in conjunction with data exchange among the mobile device, the wearable device and the smart household equipment. To facilitate description, the mobile device, the wearable device and the smart household equipment are embodied as a smart handset, a smart bracelet and a smart air-conditioner respectively by way of example. Fig. 6 is a flow chart showing a control method for a smart household equipment according to an exemplary embodiment. As shown in Fig. 6, the method may comprise the following steps:

Step 602: establishing a binding relation between the smart handset and the smart bracelet.

In this embodiment, Figs. 3A-3B and the corresponding literal descriptions may be referred to, and the details will not be repeated herein.

Step 604:acquiring by the smart handset a MAC address of the smart bracelet, with which a binding relation has been established, as a unique identification of the smart bracelet.

Of course, in this embodiment, a binding relation between the smart handset and the smart bracelet may not be established in advance. By searching out the smart bracelet using the smart handset, the unique identification of the smart bracelet, such as the MAC address of the smart bracelet, can also be acquired, and then the smart household equipment is controlled based thereon.

Step 605: displaying by the smart handset all scanned wearable devices, and selecting one or more wearable devices by a user according to the actual conditions.

In this embodiment, since there may be multiple wearable devices near the smart handset but not all the wearable devices need to perform the processes according to the technical solutions of this disclosure, the multiple wearable devices may be displayed so that the user can select the needed wearable device(s) intuitively.

Step 606: sending by the smart handset the MAC address of the selected wearable device (for example, a smart bracelet) to the smart household equipment.

In this embodiment, the smart handset and the smart household equipment may be connected to the same wireless LAN, and the MAC address may be transmitted by WIFI signals. Of course, data transmission between the smart handset and the smart household equipment may take any form, which will not be limited in this disclosure.

Step 608: storing by the smart household equipment the received MAC address.

Step 610: sending by the smart handset a broadcast control command to the smart bracelet.

In this embodiment, the smart handset may determine an operative goal based on the user's input information. If the user wants to control the smart household equipment using the smart bracelet, the smart handset may set first information in the broadcast control command, so that the smart bracelet can periodically send a radio broadcast message containing its MAC address. If the user wants to terminate control of the smart household equipment by the smart bracelet, the smart handset may set second information in the broadcast control command, so that the smart bracelet can stop sending the radio broadcast message containing its MAC address.

Step 612: assuming that the broadcast control command contains the first information, then periodically sending by the smart bracelet the radio broadcast message containing a MAC address of the smart bracelet.

In this embodiment, in addition to or instead of controlling by the smart handset the transmission of the radio broadcast message by the smart bracelet, there may be many other control schemes, which will not be limited in this disclosure.

Since the smart bracelet is configured with a sensor for detecting various preset parameters, the user can directly operate the smart bracelet to start or stop sending of the radio broadcast message by the smart bracelet. For example, assume the smart bracelet can detect a "clicking" operation performed by the user on itself. When the smart bracelet detects that the user has performed a "clicking" operation conforming to a first preset number of times/frequency/strength, the smart bracelet periodically sends the radio broadcast message. When the smart bracelet detects that the user has performed a "clicking" operation conforming to a second preset number of times/frequency/strength, the smart bracelet stops sending the radio broadcast message. The "first preset number of times/frequency/strength" may be the same as the "second preset number of times/frequency/strength". Each time the "clicking" operation by the user is detected, the operating mode may be switched from a current one to another.

Of course, various control modes may be used alternately for the sending process of the radio broadcast message. For example, the user may send a broadcast control command using the mobile device to cause the smart bracelet to send the radio broadcast message. Then, sending of the radio broadcast message by the smart bracelet may be stopped through a "clicking" operation performed on the smart bracelet.

It should be mentioned that the above "clicking" operation is just an example. The operation on the bracelet may also be a preset action performed with the bracelet being worn, such as drawing a ring in the air with the bracelet, swinging the bracelet vertically or horizontally or the like, which will not be limited in this disclosure.

Step 614: Comparing by the smart household equipment the MAC address in the received radio broadcast message with the MAC address stored in the smart household equipment.

In this embodiment, transmission of the radio broadcast message between the smart bracelet and the smart household equipment can be performed in any manner, which will not be limited in this disclosure. For example, both the smart bracelet and the smart household equipment support Bluetooth functions, so that Bluetooth signals can carry the radio broadcast message.

Step 616: Executing by the smart household equipment a preset control command.

In this embodiment, no matter whether it is carried by Bluetooth signals or other radio signals, the radio broadcast message has a limited transmission range. For example, the transmission range may be a circular area with the smart bracelet as the circle center and the signal transmission distance as the radius, and may be affected by blocking of radio signals by objects such as walls. In summary, only when the smart bracelet is within a certain range, can it receive the radio broadcast message.

Therefore, when the smart household equipment receives the radio broadcast message, it means that the distance between the smart bracelet and the smart household equipment is relatively short. In addition, since the smart bracelet is a wearable device, it actually means that the user is near the smart household equipment. The user may potentially need to use the smart household equipment. By executing the preset control command beforehand (when the user feels that he/she needs to use the smart household equipment, the user may already feel uncomfortable physiologically or psychologically, but the smart household equipment may not be able to satisfy the user's needs immediately, which may deepen the user's discomfort), corresponding services can be provided before the user feels that he/she may need to use the smart household equipment, thereby greatly improving the user experience.

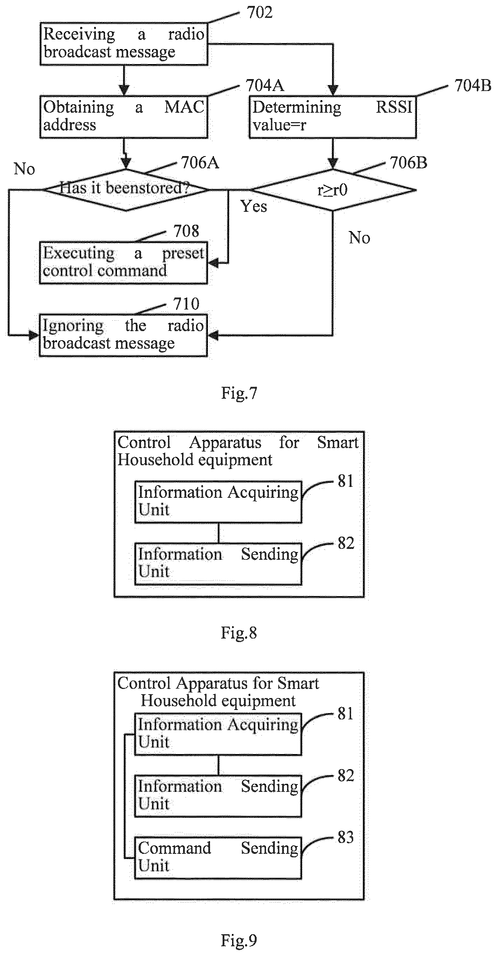

Fig. 7 is a flow chart showing a process performed by a smart household equipment on a radio broadcast message according to an exemplary embodiment. As shown in Fig. 7, the method is applied to a smart household equipment and may comprise the following steps:

Step 702: Receiving by the smart household equipment a radio broadcast message.

Step 704A: Processing the radio broadcast message by the smart household equipment to obtain an MAC address.

Step 704B: Determining a received signal strength indication RSSI of the radio broadcast message by the smart household equipment. Here, it is assumed that the RSSI value is r.

Step 706A: Comparing by the smart household equipment the obtained MAC address and a stored MAC address to determine if the obtained MAC address has been stored. If it is not stored, the process proceeds to step 710.

In this embodiment, the MAC address stored in the smart household equipment is acquired by a mobile device from a wearable device bound thereto, and then sent by the mobile device to the smart household equipment and stored in the smart household equipment. Since there is a binding relation between the mobile device and the wearable device, it means that the wearable device is reliable, thereby preventing the smart home device from taking risks.

Step 706B: Comparing by the smart household equipment the determined signal strength r with a preset signal strength r0. The process proceeds to step 710 if r<r0.

Step 708: When the obtained MAC address is a stored MAC address and r≥r0, executing by the smart household equipment a preset control command to switch from an original operating state to a smart operating state.

Step 710: Ignoring the received radio broadcast message.

In this embodiment, the radio broadcast message has a relatively broad transmission range, so an actual distance between the wearable device and the smart household equipment can be determined more accurately by acquiring an RSSI value. The RSSI value is inversely related with the actual distance. In other words, the greater the RSSI value is, the smaller the distance is, and vice versa.

In this embodiment, the preset control command is configured to adjust at least one of an operating parameter and an operating mode of the smart household equipment. For example, if the smart household equipment is an air-conditioner, the adjusting process of the operating parameters and operating modes is as below:

### 1. Operating Parameter

The operating parameters of an air-conditioner may comprise at least one of the following: an operating frequency and an air guiding angle etc. Of course, these parameters are examples only, there may be other parameters, which will not be limited herein.

Regarding the operating frequency: Assume an air-conditioner operates under a relatively low frequency at the beginning. When the air-conditioner detects that the user is close (the determination results in steps 706A and 706B are Yes respectively), the operating frequency is increased, so that better cooling or heating effect can be realized, thereby enhancing the user experience. The distance from the user to the operating frequency may be reversely correlated. That is, the smaller the distance is, the higher the operating frequency is, and vice versa.

Regarding the air guiding angle: Assume the air guiding angle of the air-conditioner is suitable for ventilation of a room at the beginning. When the air-conditioner detects that the user is close, the discharged wind will flow towards the user by adjusting the air guiding angle to improve the user experience. The air-conditioner may calculate a needed air guiding angle according to a distance from the user inferred based on the detected RSSI value and an installation height of itself etc.

Of course, in other embodiments, assume that the air-conditioner determines that the user is nearby through a MAC address instead of acquiring an RSSI value. Then, the air guiding angle of the air-conditioner may be set in advance. For example, when the air-conditioner is located in the living room, a certain air guiding angle is set by the user so that the air-conditioner can directly blow towards a sofa under that air guiding angle. Accordingly, when the air-conditioner detects that the user is nearby (the determination result in step 706A is Yes) and determines that the user is at the sofa or will be at the sofa, the "certain air guiding angle" may be directly selected.

### 2. Operating Mode

Air-conditioners have various operating modes, such as a sleeping mode, a humidity-removing mode, a ventilating mode and a powerful mode etc. For example, assume an air-conditioner is in the sleeping mode at the beginning. When the air-conditioner detects that the user is nearby, it may be switched to the powerful mode to increase its operating frequency and its temperature-adjusting strength, thereby enhancing the user experience.

Further, when the radio broadcast message is not received by the smart household equipment in a preset time period, this means that the user has gone away from the smart household equipment (for example, the user has left the room where the smart household equipment is installed), and the smart household equipment may return from the smart operating state to the original operating state; for example, the smart household equipment reduces its operating frequency to save power etc.

With reference to the above embodiments, one application scenariois as below:

Assume the user has installed air-conditioners in the living room and the bedroom. When the user gets home after work and passes the door or is about to pass the door, the air-conditioner in the living room has received a radio broadcast message sent by a wearable device worn by the user. Then, the air-conditioner in the living room automatically adjusts its operating frequency and air guiding angle and other operating parameters, or switches its operating mode from the sleeping mode to the powerful mode, so that the user can enjoy the comfortable temperature adjusted by the air-conditioner after entering the living room. When the user needs to enter the bedroom from the living room, before he/she enters the bedroom, the air-conditioner in the bedroom has received a radio broadcast message sent by the wearable device worn by the user. Then, the air-conditioner in the bedroom automatically adjusts its operating frequency and air guiding angle and other operating parameters, or switches its operating mode from the sleeping mode to the powerful mode, so that the user can enjoy the comfortable temperature adjusted by the air-conditioner after entering the bedroom. At the same time, after the user leaves the living room, since the air-conditioner in the living room does not receive the radio broadcast message periodically sent by the wearable device in a preset time period, the air-conditioner in the living room automatically returns to its original operating state to save power.

Correspondingly to the embodiments of the control methods for a smart household equipment described above, this disclosure also provides embodiments of control apparatuses for a smart household equipment.

Fig. 8 is a block diagram of a control apparatus for a smarthousehold equipment at a mobile device side according to an exemplary embodiment. As shown in Fig. 8, the apparatus comprises an information acquiring unit 81 and an information sending unit 82.

The information acquiring unit 81 is configured to enable a mobile device to acquire a unique identification of at least one wearable device, wherein the wearable devices include a wearable device bound to the mobile device and a wearable device communicating with the mobile device through near field communication NFC in a certain range, each wearable device corresponds to one unique identification, and the mobile device communicates with the smart household equipment through a local area network LAN or the Internet.

The information sending unit 82 is configured to enable the mobile device to send the unique identification to the smart household equipment, so that the smart household equipment stores the unique identification and executes a preset control command when receiving a radio broadcast message containing the unique identification.

### Optionally, the unique identification is a MAC address.

Fig. 9 is a block diagram of another control apparatus for a smart household equipment at a mobile device side according to an exemplary embodiment. The apparatus further comprises a command sending unit 83 on the basis of the embodiment shown in Fig. 8.

The command sending unit 83 is configured to enable the mobile device to send a broadcast control command to the wearable device after the mobile device sends the unique identification to the smart household equipment.

When the broadcast control command comprises first information, the wearable device is controlled to periodically send a radio broadcast message containing the unique identification; when the broadcast control command comprises second information, the wearable device is controlled to stop sending the radio broadcast message.

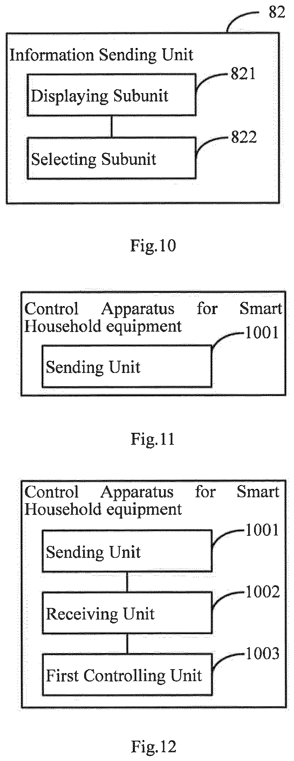

Fig. 10 is a block diagram of a further control apparatus for a smart household equipment at a mobile device side according to an exemplary embodiment. The apparatus is based on the embodiment shown in Fig. 8, and the information sending unit 82 comprises a displaying subunit 821 and a selecting subunit 822.

The displaying subunit 821 is configured to display the at least one wearable device.

The selecting subunit 822 is configured to send unique identifications corresponding to one or more selected wearable devices to the smart household equipment based on one or more detected user's selection operation.

Fig. 11 is a block diagram of a control apparatus for a smart household equipment at a wearable device side according to an exemplary embodiment. As shown in Fig. 11, the apparatus comprises a sending unit 1001.

The sending unit 1001 is configured to enable a wearable device to periodically send a radio broadcast message containing a unique identification of the wearable device, wherein the wearable device is a wearable device bound to a mobile device or a wearable device communicating with the mobile device through near field communication NFC in a certain range, each wearable device corresponds to one unique identification, and the mobile device communicates with the smart household equipment through a local area network LAN or the Internet.

The unique identification is sent by the mobile device to the smart household equipment, so that the smart household equipment stores the unique identification and executes a preset control command when receiving the radio broadcast message.

Optionally, the unique identification is a MAC address.

Fig. 12 is a block diagram of another control apparatus for a smart household equipment at a wearable device side according to an exemplary embodiment. The apparatus further comprises a receiving unit 1002 and a first controlling unit 1003 on the basis of the embodiment shown in Fig. 11.

The receiving unit 1002 is configured to receive a broadcast control command sent by the mobile device.

The first controlling unit 1003 is configured to periodically send the radio broadcast message when the broadcast control command comprises first information and to stop sending the radio broadcast message when the broadcast control command comprises second information.

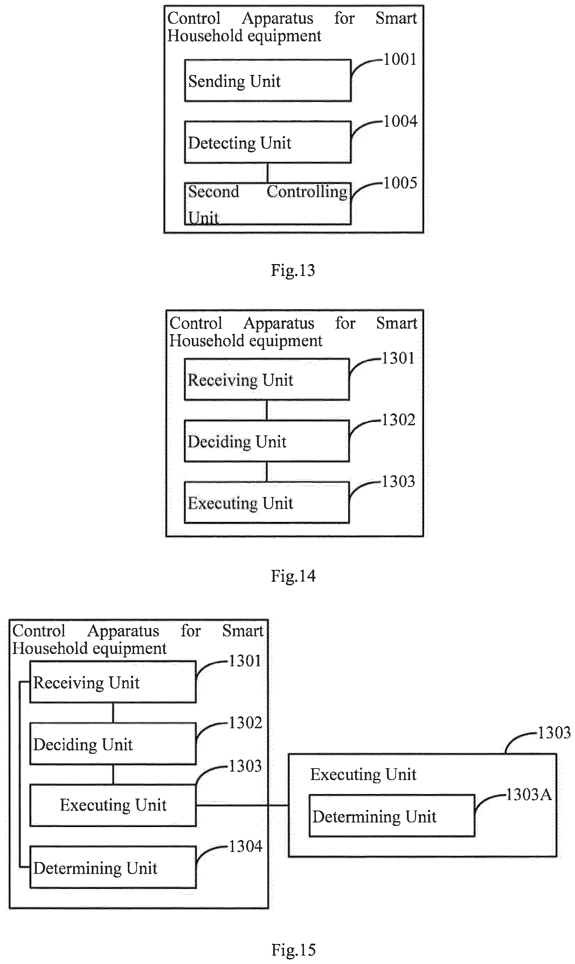

Fig. 13 is a block diagram of a further control apparatus for a smart household equipment at a wearable device side according to an exemplary embodiment. The apparatus further comprises a detecting unit 1004 and a second controlling unit 1005 on the basis of the embodiment shown in Fig. 11.

The detecting unit 1004 is configured to detect an operation performed by a user.

The second controlling unit 1005 is configured to periodically send the radio broadcast message when a first preset operation performed by the user is detected and to stop sending the radio broadcast message when a second preset operation performed by the user is detected.

It should be noted that the detecting unit 1004 and the second controlling unit 1005 of the apparatus embodiment shown in Fig. 13 may also be included in the apparatus embodiment shown in Fig. 12, which will not be limited in this disclosure.

Fig. 14 is a block diagram of a control apparatus for a smart household equipment at the smart household equipment side according to an exemplary embodiment. As shown in Fig. 14, the apparatus comprises a receiving unit 1301, a deciding unit 1302 and an executing unit 1303.

The receiving unit 1301 is configured to enable the smart household equipment to receive a radio broadcast message containing an identification.

The deciding unit 1302 is configured to enable the smart household equipment to determine whether the identification is a stored unique identification of a wearable device, the unique identification being sent from a mobile device, wherein the wearable device is a wearable device bound to the mobile device or a wearable device communicating with the mobile device through near field communication NFC in a certain range, each wearable device corresponds to one unique identification, and the mobile device communicates with the smart household equipment through a local area network LAN or the Internet.

The executing unit 1303 is configured to enable the smart household equipment to execute a preset control command to switch from an original operating state to a smart operating state if the identification is the unique identification.

Optionally, the preset control command is configured to adjust at least one of an operating parameter and an operating mode of the smart household equipment which receives the radio broadcast message.

Fig. 15 is a block diagram of another control apparatus for a smart household equipment at a smart household equipment side according to an exemplary embodiment. Based on the embodiment shown in Fig. 14,the apparatus further comprises a determining unit 1304, and the executing unit 1303 may comprise an executing subunit 1303A.

The determining unit 1304 is configured to determine a received signal strength indication value of the radio broadcast message.

The executing subunit 1303A is configured to execute the preset control command when the received signal strength indication value reaches a preset value and the radio broadcast message contains the unique identification.

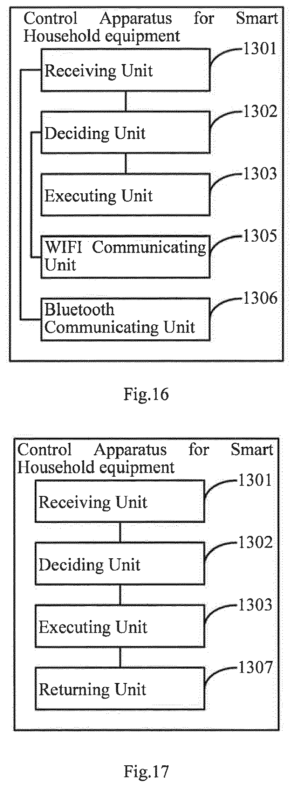

Fig. 16 is a block diagram of a further control apparatus for a smart household equipment at a smart household equipment side according to an exemplary embodiment. Based on the embodiment shown in Fig. 14, the apparatus further comprises a WIFI communicating unit 1305 and a Bluetooth communicating unit 1306.

The WIFI communicating unit 1305 is configured to receive the unique identification sent by the mobile device through a WIFI connection established therewith.

The Bluetooth communicating unit 1306 is configured to receive the radio broadcast message through a Bluetooth connection established with the wearable device.

It should be noted that the WIFI communicating unit 1305 and the Bluetooth communicating unit 1306 of the apparatus embodiment shown in Fig. 16 may also be included in the apparatus embodiment shown in Fig. 15, which will not be limited in this disclosure.

Fig. 17 is a block diagram of a control apparatus for a smart household equipment at the smart household equipment side according to an exemplary embodiment. Based on the embodiment shown in Fig. 14, the apparatus further comprises a returning unit 1307.

The returning unit 1307 is configured to return from the smart operating state to the original operating state when the radio broadcast message is not received in a preset time period.

It should be noted that the returning unit 1307 of the apparatus embodiment shown in Fig. 17 may also be included in the apparatus embodiments shown in Figs. 15-16, which will not be limited in this disclosure.

With respect to the apparatus in the above embodiments, the specific manners for performing operations for individual modules therein have been described in detail in the embodiments regarding the related methods, which will not be elaborated herein.

Since the apparatus embodiments substantially correspond to the method embodiments, similar parts of the method embodiments may be referred to for the apparatus embodiments. The above apparatus embodiments are illustrative only. The units described as separate members may be or may not be physically separated. The members described as units may be or may not be physical units, may be located at the same place or may be distributed in multiple network units. The objectives of the solutions of this disclosure may be realized by selecting some or all of the modules according to the actual needs. The above can be understood and implemented by those skilled in the art without any inventive work.

Accordingly, this disclosure also provides a control apparatus for a smart household equipment at a mobile device side, the control apparatus comprising: a processor; and a memory storing an instruction executable by the processor, wherein the processor is configured to: acquire a unique identification of at least one wearable device, wherein the wearable devices include a wearable device bound to the mobile device and a wearable device communicating with the mobile device through near field communication NFC in a certain range, each wearable device corresponds to one unique identification, and the mobile device communicates with a smart household equipment through a local area network LAN or the Internet; and send the unique identification to the smart household equipment, so that the smart household equipment stores the unique identification and executes a preset control command when receiving a radio broadcast message containing the unique identification.

Accordingly, this disclosure also provides a mobile device comprising a memory and one or more programs, wherein the one or more programs is/are stored in the memory and configured to be executed by one or more processors so as to execute instructions for performing the following operations comprising: acquiring a unique identification of at least one wearable device, wherein the wearable devices include a wearable device bound to the mobile device and a wearable device communicating with the mobile device through near field communication NFC in a certain range, each said wearable device corresponding to one unique identification, and the mobile device communicating with a smart household equipment through a local area network LAN or the Internet; and sending the unique identification to the smart household equipment, so that the smart household equipment stores the unique identification and executes a preset control command when receiving a radio broadcast message containing the unique identification.

Accordingly, this disclosure also provides a control apparatus for a smart household equipment at a wearable device side, the control apparatus comprising: a processor; and a memory storing an instruction executable by the processor, wherein the processor is configured to: periodically send a radio broadcast message containing a unique identification of the wearable device, wherein the wearable device is a wearable device bound to a mobile device or a wearable device communicating with the mobile device through near field communication NFC in a certain range, each wearable device corresponds to one unique identification, and the mobile device communicates with a smart household equipment through a local area network LAN or the Internet, and wherein the unique identification is sent by the mobile device to the smart household equipment, so that the smart household equipment stores the unique identification and executes a preset control command when receiving the radio broadcast message.

Accordingly, this disclosure also provides a wearable device comprising a memory and one or more programs, wherein the one or more programs is/are stored in the memory and configured to be executed by one or more processors so as to execute instructions for performing the following operations comprising: periodically sending a radio broadcast message containing a unique identification of the wearable device, wherein the wearable device is a wearable device bound to a mobile device or a wearable device communicating with the mobile device through near field communication NFC in a certain range, each wearable device corresponds to one unique identification, and the mobile device communicates with a smart household equipment through a local area network LAN or the Internet, and wherein the unique identification is sent by the mobile device to the smart household equipment, so that the smart household equipment stores the unique identification and executes a preset control command when receiving the radio broadcast message.

Accordingly, this disclosure also provides a control apparatus for a smart household equipment at the smart household equipment side, the control apparatus comprising: a processor; and a memory storing an instruction executable by the processor, wherein the processor is configured to: receive a radio broadcast message containing an identification; determine whether the identification is a stored unique identification of a wearable device, the unique identification being sent from a mobile device, wherein the wearable device is a wearable device bound to the mobile device or a wearable device communicating with the mobile device through near field communication NFC in a certain range, each wearable device corresponds to one unique identification, and the mobile device communicates with the smart household equipment through a local area network LAN or the Internet; and execute a preset control command to switch from an original operating state to a smart operating state if the identification is the unique identification.

Accordingly, this disclosure also provides a smart household equipment comprising a memory and one or more programs, wherein the one or more programs is/are stored in the memory and configured to be executed by one or more processors so as to execute instructions for performing the following operations comprising: receiving a radio broadcast message containing an identification; determining whether the identification is a stored unique identification of a wearable device, the unique identification being sent from a mobile device, wherein the wearable device is a wearable device bound to the mobile device or a wearable device communicating with the mobile device through near field communication NFC in a certain range, each wearable device corresponds to one unique identification, and the mobile device communicates with the smart household equipment through a local area network LAN or the Internet; and executing a preset control command to switch from an original operating state to a smart operating state if the identification is the unique identification.

In addition, this disclosure also provides a control system for a smart household equipment, comprising the mobile device, wearable device and smart household equipment presented in the above, wherein the mobile device can realize the control apparatuses for a smart household equipment at the mobile device side according to any of Figs. 8-10 by executing corresponding instructions, the wearable device can realize the control apparatuses for a smart household equipment at the wearable device side according to any of Figs. 11-13 by executing corresponding instructions, and smart household equipment can realize the control apparatuses for a smart household equipment at the smart household equipment side according to any of Figs. 14-17 by executing corresponding instructions.

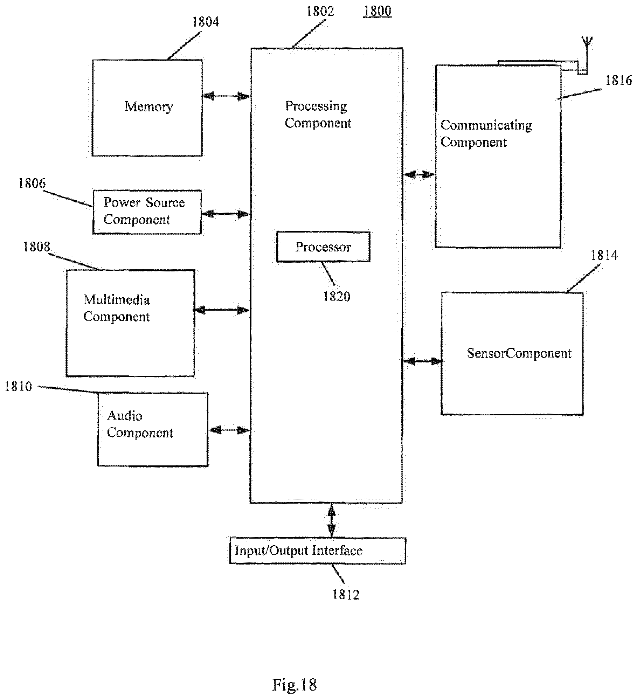

FIG. 18 is a block diagram of a control apparatus 1800 for a smart household equipment according to an exemplary embodiment. For example, when embodied as a mobile device, the apparatus 1800 may be a mobile phone, a computer, a digital broadcast terminal, a messaging device, a gaming console, a tablet, a medical device, exercise equipment, a personal digital assistant or the like; when embodied as a wearable device, the apparatus 1800 may be a smart bracelet, smart glasses, a smart necklace, a smart ring or the like;when embodied as a smart household equipment, the apparatus 1800 may be a smart air-conditioner, a smart water dispenser, a smart refrigerator or the like.

Referring to Fig. 18, the apparatus 1800 may include one or more of the following components: a processing component 1802, a memory 1804, a power component 1806, a multimedia component 1808, an audio component 1810, an input/output (I/O) interface 1812, a sensor component 1814, and a communication component 1816.

The processing component 1802 typically controls overall operations of the apparatus 1800, such as the operations associated with display, telephone calls, data communications, camera operations, and recording operations. The processing component 1802 may include one or more processors 1820 to execute instructions to perform all or part of the steps in the above described methods. Moreover, the processing component 1802 may include one or more modules which facilitate the interaction between the processing component 1802 and other components. For instance, the processing component 1802 may include a multimedia module to facilitate the interaction between the multimedia component 1808 and the processing component 1802.

The memory 1804 is configured to store various types of data to support the operation of the apparatus 1800. Examples of such data include instructions for any applications or methods operated on the apparatus 1800, contact data, phonebook data, messages, pictures, video, etc. The memory 1804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1806 provides power to various components of the apparatus 1800. The power component 1806 may include a power management system, one or more power sources, and any other components associated with the generation, management, and distribution of power in the apparatus 1800.

The multimedia component 1808 includes a screen providing an output interface between the apparatus 1800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1808 includes a front camera and/or a rear camera. The front camera and the rear camera may receive an external multimedia datum while the apparatus 1800 is in an operation mode, such as a photographing mode or a video mode. Each of the front camera and the rear camera may be a fixed optical lens system or have focus and optical zoom capability.

The audio component 1810 is configured to output and/or input audio signals. For example, the audio component 1810 includes a microphone ("MIC") configured to receive an external audio signal when the apparatus 1800 is in an operation mode, such as a call mode, a recording mode, and a voice recognition mode. The received audio signal may be further stored in the memory 1804 or transmitted via the communication component 1816. In some embodiments, the audio component 1810 further includes a speaker to output audio signals.

The I/O interface 1812 provides an interface between the processing component 1802 and peripheral interface modules, such as a keyboard, a click wheel, buttons, and the like. The buttons may include, but are not limited to, a home button, a volume button, a starting button, and a locking button.

The sensor component 1814 includes one or more sensors to provide status assessments of various aspects of the apparatus 1800. For instance, the sensor component 1814 may detect an open/closed status of the apparatus 1800, relative positioning of components, e.g., the display and the keypad, of the apparatus 1800, a change in position of the apparatus 1800 or a component of the apparatus 1800, a presence or absence of user contact with the apparatus 1800, an orientation or an acceleration/deceleration of the apparatus 1800, and a change in temperature of the apparatus 1800. The sensor component 1814 may include a proximity sensor configured to detect the presence of nearby objects without any physical contact. The sensor component 1814 may also include a light sensor, such as a CMOS or CCD image sensor, for use in imaging applications. In some embodiments, the sensor component 1814 may also include an accelerometer sensor, a gyroscope sensor, a magnetic sensor, a pressure sensor, or a temperature sensor.

The communication component 1816 is configured to facilitate communication, wired or wirelessly, between the apparatus 1800 and other devices. The apparatus 1800 can access a wireless network based on a communication standard, such as WiFi, 2G, or 3G, or a combination thereof. In one exemplary embodiment, the communication component 1816 receives a broadcast signal or broadcast associated information from an external broadcast management system via a broadcast channel. In one exemplary embodiment, the communication component 1816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1804, executable by the processor 1820 in the apparatus 1800, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A control method for smart household equipment, the method comprising:
receiving (612) by the smart household equipment a radio broadcast message containing an identification, the radio broadcast message being sent by a wearable device;
**characterised in that** the method further comprises:
determining (614) by the smart household equipment whether the identification is a stored unique identification of the wearable device, the unique identification being previously sent (606) to the smart household equipment from a mobile device, wherein the wearable device is a wearable device bound to the mobile device or the wearable device is a wearable device communicating with the mobile device through near field communication, NFC, in a certain range, each wearable device corresponds to one unique identification, and the mobile device communicates with the smart household equipment through a local area network LAN and/or through the Internet;
if the identification is a unique identification of the wearable device, executing (616) by the smart household equipment a preset control command to switch the smart household equipment from an original operating state to a smart operating state, the original operating state being a first state in which the smart home device operates according to a first set of operating parameters and the smart operating state being a second state in which the smart device operates according to a second, different, set of operating parameters.

2. The method according to claim 1, further comprising:
determining a received signal strength indication value of the radio broadcast message,
wherein said executing the preset control command comprises executing the preset control command when the received signal strength indication value reaches a preset value and the radio broadcast message contains the unique identification.

3. The method according to claim 1 or 2, wherein the preset control command is configured to adjust at least one of an operating parameter and an operating mode of the smart household equipment which receives the radio broadcast message.

4. The method according to any preceding claim, further comprising:
receiving the unique identification sent by the mobile device through a WIFI connection established therewith; and
receiving the radio broadcast message through a Bluetooth connection established with the wearable device.

5. The method according to any preceding claim, further comprising: returning from the smart operating state to the original operating state when the radio broadcast message is not received in a preset time period.

6. A smart household equipment, **characterized by** comprising:
a processor; and
a memory storing an instruction executable by the processor,
wherein the processor is configured to carry out the method of any of claims 1 to 5.

7. A system comprising a smart household equipment according to claim 6, a mobile device and a wearable device, wherein the mobile device communicates with the smart household equipment through a local area network LAN and/or through the Internet, and comprises:
a processor; and
a memory storing an instruction executable by the processor,
wherein the processor is configured to:
acquire a unique identification of the wearable device, and; and
send the unique identification to the smart household equipment.
the wearable device comprising:
a processor; and
a memory storing an instruction executable by the processor;
wherein the processor is configured to:
periodically send to the smart household device a radio broadcast message containing a unique identification of the wearable device;
wherein the wearable device is a wearable device bound to the mobile device or a wearable device communicating with the mobile device through near field communication, NFC, in a certain range, and the wearable device corresponds to the unique identification.

8. A computer program including instructions for executing the steps of a control method for a smart household equipment according to any one of claims 1 to 5 when said program is executed by a computer.

9. A recording medium readable by a computer and having recorded thereon a computer program including instructions that when executed cause a computer to carry out the steps of a control method for smart household equipment according to any one of claims 1 to 5.

## Patentansprüche

1. Steuerverfahren für intelligente Haushaltsgeräte, wobei das Verfahren Folgendes beinhaltet:
Empfangen (612), von dem intelligenten Haushaltsgerät, einer Funkübertragungsnachricht, die eine Identifikation enthält, wobei die Funkübertragungsnachricht von einem tragbaren Gerät gesendet wird;
**dadurch gekennzeichnet, dass** das Verfahren ferner Folgendes beinhaltet:
Feststellen (614), durch das intelligente Haushaltsgerät, ob die Identifikation eine gespeicherte eindeutige Identifikation des tragbaren Geräts ist, wobei die eindeutige Identifikation zuvor von einem mobilen Gerät zu dem intelligenten Haushaltsgerät gesendet (606) wurde, wobei das tragbare Gerät ein tragbares Gerät ist, das an das mobile Gerät gebunden ist, oder wobei das tragbare Gerät mit dem mobilen Gerät durch Nahfeldkommunikation NFC in einem bestimmten Bereich kommuniziert, wobei jedes tragbare Gerät einer eindeutigen Identifikation entspricht, und das mobile Gerät mit dem intelligenten Haushaltsgerät durch ein lokales Netzwerk LAN und/oder durch das Internet kommuniziert;
Ausführen (616), durch das intelligente Haushaltsgerät, wenn die Identifikation eine eindeutige Identifikation des tragbaren Geräts ist, eines voreingestellten Steuerbefehls zum Umschalten des intelligenten Haushaltsgeräts von einem ursprünglichen Betriebszustand in einen intelligenten Betriebszustand, wobei der ursprüngliche Betriebszustand ein erster Zustand ist, in dem das intelligente Heimgerät gemäß einem ersten Satz von Betriebsparametern arbeitet, und der intelligente Betriebszustand ein zweiter Zustand ist, in dem das intelligente Gerät gemäß einem zweiten, unterschiedlichen Satz von Betriebsparametern arbeitet.

2. Verfahren nach Anspruch 1, das ferner Folgendes beinhaltet:
Feststellen eines empfangenen Signalstärkeanzeigewertes der Funkübertragungsnachricht,
wobei das genannte Ausführen des voreingestellten Steuerbefehls das Ausführen des voreingestellten Steuerbefehls beinhaltet, wenn der empfangende Signalstärkeanzeigewert einen voreingestellten Wert erreicht und die Funkübertragungsnachricht die eindeutige Identifikation enthält.

3. Verfahren nach Anspruch 1 oder 2, wobei der voreingestellte Steuerbefehl zum Justieren eines Betriebsparameters und/oder einer Betriebsart des intelligenten Haushaltsgeräts konfiguriert ist, das die Funkübertragungsnachricht empfängt.

4. Verfahren nach einem vorherigen Anspruch, das ferner Folgendes beinhaltet:
Empfangen der von dem mobilen Gerät gesendeten eindeutigen Identifikation durch eine damit eingerichtete WiFi-Verbindung; und
Empfangen der Funkübertragungsnachricht durch eine mit dem tragbaren Gerät eingerichtete Bluetooth-Verbindung.

5. Verfahren nach einem vorherigen Anspruch, das ferner Folgendes beinhaltet: Zurückkehren von dem intelligenten Betriebszustand in den ursprünglichen Betriebszustand, wenn die Funkübertragungsnachricht nicht innerhalb einer voreingestellten Zeitperiode empfangen wird.

6. Intelligentes Haushaltsgerät, **dadurch gekennzeichnet, dass** es Folgendes umfasst:
einen Prozessor; und
einen Speicher zum Speichern eines von dem Prozessor ausführbaren Befehls,
wobei der Prozessor zum Ausführen des Verfahrens nach einem der Ansprüche 1 bis 5 konfiguriert ist.

7. System, das Folgendes umfasst: ein intelligentes Haushaltsgerät nach Anspruch 6, ein mobiles Gerät und ein tragbares Gerät, wobei das mobile Gerät mit dem intelligenten Haushaltsgerät durch ein lokales Netzwerk LAN und/oder durch das Internet kommuniziert und Folgendes umfasst:
einen Prozessor; und
einen Speicher zum Speichern eines von dem Prozessor ausführbaren Befehls,
wobei der Prozessor konfiguriert ist zum:
Erfassen einer eindeutigen Identifikation des tragbaren Geräts, und
Senden der eindeutigen Information zu dem intelligenten Haushaltsgerät;
wobei das tragbare Gerät Folgendes umfasst:
einen Prozessor; und
einen Speicher zum Speichern eines von dem Prozessor ausführbaren Befehls;
wobei der Prozessor konfiguriert ist zum:
periodischen Senden einer Funkübertragungsnachricht zu dem intelligenten Haushaltsgerät, die eine eindeutige Identifikation des tragbaren Geräts enthält;
wobei das tragbare Gerät ein tragbares Gerät ist, das an das mobile Gerät gebunden ist, oder ein tragbares Gerät, das mit dem mobilen Gerät durch Nahfeldkommunikation NFC in einem bestimmten Bereich kommuniziert, und das tragbare Gerät der eindeutigen Identifikation entspricht.

8. Computerprogramm mit Befehlen zum Ausführen der Schritte eines Steuerverfahrens für ein intelligentes Haushaltsgerät nach einem der Ansprüche 1 bis 5, wenn das genannte Programm von einem Computer ausgeführt wird.

9. Aufzeichnungsmedium, das von einem Computer gelesen werden kann und auf dem ein Computerprogramm mit Befehlen gespeichert ist, die bei Ausführung bewirken, dass ein Computer die Schritte eines Steuerverfahrens für ein intelligentes Haushaltsgerät nach einem der Ansprüche 1 bis 5 ausführt.

## Revendications

1. Procédé de commande d'un équipement domestique intelligent, le procédé comprenant :
la réception (612) par l'équipement domestique intelligent d'un message de radiodiffusion contenant une identification, le message de radiodiffusion étant envoyé par un dispositif portable ;
**caractérisé en ce que** le procédé comprend en outre :
la détermination (614) par l'équipement domestique intelligent que l'identification est ou non une identification unique mémorisée du dispositif portable, l'identification unique étant envoyée antérieurement (606) à l'équipement domestique intelligent par un dispositif mobile, dans lequel le dispositif portable est un dispositif portable lié au dispositif mobile ou le dispositif portable est un dispositif portable communiquant avec le dispositif mobile par communication en champ proche, NFC, dans une certaine portée, chaque dispositif portable correspond à une seule identification unique, et le dispositif portable communique avec l'équipement domestique intelligent par le biais d'un réseau local LAN et/ou par le biais de l'Internet ;
si l'identification est une identification unique du dispositif portable, l'exécution (616) par l'équipement domestique intelligent d'un ordre de commande prédéfini pour commuter l'équipement domestique intelligent d'un état opérationnel initial à un état opérationnel intelligent, l'état opérationnel initial étant un premier état dans lequel le dispositif domestique intelligent fonctionne conformément à un premier ensemble de paramètres opérationnels et l'état opérationnel intelligent étant un second état dans lequel le dispositif intelligent fonctionne conformément à un second ensemble différent de paramètres opérationnels.

2. Procédé selon la revendication 1, comprenant en outre :
la détermination d'une valeur d'indication de force de signal reçue du message de radiodiffusion,
dans lequel ladite exécution de l'ordre de commande prédéfini comprend l'exécution de l'ordre de commande prédéfini quand la valeur d'indication de force de signal reçue atteint une valeur prédéfinie et le message de radiodiffusion contient l'identification unique.

3. Procédé selon la revendication 1 ou 2, dans lequel l'ordre de commande prédéfini est configuré pour ajuster au moins l'un d'un paramètre opérationnel et d'un mode opérationnel de l'équipement domestique intelligent qui reçoit le message de radiodiffusion.

4. Procédé selon l'une quelconque des revendications précédentes, comprenant en outre :
la réception de l'identification unique envoyée par le dispositif mobile par le biais d'une connexion Wi-Fi établie avec celui-ci ; et
la réception du message de radiodiffusion par le biais d'une connexion Bluetooth établie avec le dispositif portable.

5. Procédé selon l'une quelconque des revendications précédentes, comprenant en outre : le retour depuis l'état opérationnel intelligent sur l'état opérationnel initial quand le message de radiodiffusion n'est pas reçu dans une période de temps prédéfinie.

6. Equipement domestique intelligent, **caractérisé en ce qu'**il comprend :
un processeur ; et
une mémoire mémorisant une instruction exécutable par le processeur,
dans lequel le processeur est configuré pour exécuter le procédé selon l'une quelconque des revendications 1 à 5.

7. Système comprenant un équipement domestique intelligent selon la revendication 6, un dispositif mobile et un dispositif portable, dans lequel le dispositif mobile communique avec l'équipement domestique intelligent par le biais d'un réseau local LAN et/ou par le biais de l'Internet, et comprend :
un processeur ; et
une mémoire mémorisant une instruction exécutable par le processeur,
dans lequel le processeur est configuré pour :
acquérir une identification unique du dispositif portable, et : et
envoyer l'identification unique à l'équipement domestique intelligent.
le dispositif portable comprenant :
un processeur ; et
une mémoire mémorisant une instruction exécutable par le processeur,
dans lequel le processeur est configuré pour :
envoyer périodiquement au dispositif domestique intelligent un message de radiodiffusion contenant une identification unique du dispositif portable ;
dans lequel le dispositif portable est un dispositif portable lié au dispositif mobile ou
un dispositif portable communiquant avec le dispositif mobile par communication en champ proche, NFC, dans une certaine portée, et le dispositif portable correspond à l'identification unique.

8. Programme informatique comportant des instructions pour exécuter les étapes d'un procédé de commande d'un équipement domestique intelligent selon l'une quelconque des revendications 1 à 5 quand ledit programme est exécuté par un ordinateur.

9. Support d'enregistrement lisible par un ordinateur et sur lequel est enregistré un programme informatique comportant des instructions qui, à leur exécution, amènent un ordinateur à exécuter les étapes d'un procédé de commande d'un équipement domestique intelligent selon l'une quelconque des revendications 1 à 5.
